# EUROPEAN PATENT SPECIFICATION

(11) **EP 0 381 368 B1**
(45) Date of publication and mention of the grant of the patent: **01.06.1994**
(21) Application number: 90300757.3
(22) Date of filing: 24.01.1990
(51) Int. Cl.: G11B 19/20, G11B 25/04, G11B 33/14

(54) **Rigid disk drive with secured shaft**
Festplattenlaufwerk mit Sicherheitswelle
Entrainement de disque rigide avec un axe en sécurité

(30) Priority: 30.01.1989 US 303792
(43) Date of publication of application: 08.08.1990
(73) Proprietor: International Business Machines Corporation, Armonk, N.Y. 10504 (US)
(72) Inventor: Boigenzahn, Jeffrey Fred, Rochester, Minnesota 55901 (US); Bratvold, Darrell Eugene, Rochester, Minnesota 55904 (US); Rigotti, James Michael, Rochester, Minnesota 55904 (US); Tufty, Lyle Rick, Elgin, Minnesota 55932 (US)
(74) Representative: Moss, Robert Douglas

(56) References cited:
- EP-A- 0 222 939
- US-A- 3 322 365
- US-A- 4 775 906
- US-A- 4 797 762
- IBM TECHNICAL DISCLOSURE BULLETIN. vol. 30, no. 10, March 1988, NEW YORK US pages 450 - 451; "THERMALLY COMPENSATED HEAD DISK ASSEMBLY FRAME FOR ROTARY ACTUATOR DISK FILES"

## Description

### Field of the Invention

The invention relates to rigid disk drives for data storage and particularly to the securing of non-rotatable shafts between opposed walls thereof.

### Background

In the design of rigid disk drives, a common problem occurs when the axis of rotation of the disk stack and the pivot axis of the head carrier (the rotary actuator) shift relative to one another causing track misregistration (TMR). TMR may be a result of vibrations or thermally induced movements of the components. These characteristics are inherent in disk drives that use a plate type base casting design. The base casting bends during operation of the disk drive causing relative movement between the respective axes of rotation, or centrelines, of the disk stack and actuator. This can be particularly problematic for disk drives in which the positions of the data transducer heads that transfer data to and from the disk surfaces are governed by the position of a servo head that reads position information signals from a dedicated servo surface (often on the uppermost disk surface). When TMR is excessive, the data head on the disk most remote from the servo disk may not be properly aligned to the same track as the servo head, resulting in "write fault errors".

Other disk file designs are known in which TMR problems are reduced by rigidly attaching the top and bottom of the spindle shaft and the actuator to parallel opposed wall portions of a clamshell-like two part housing.

It is also known to rigidly attach spindle shaft ends to opposite walls of a single piece box casting.

### Disclosure of the Invention

When the disk file base casting is designed as either a clamshell or a box casting, the relative movement between the two shafts is minimized due to the stiffness of the structure. However, the rigid attachment of both shaft ends to the box-type base casting structure can cause physical distortion of the casting structure. Furthermore, the box casting design also creates a problem because the inside of the box cannot be easily machined to allow close tolerance mounting of the major components.

Accordingly, the invention provides a rigid disk drive including: two substantially parallel opposed wall portions between which a disk spindle assembly and a rotary actuator are mounted; a non-rotatable shaft for rotatably supporting at least one of said disk spindle assembly and said rotary actuator, said shaft extending perpendicularly in an axial direction from one of said opposed wall portions to the other; a first securing means for securing one end of said shaft to one of said opposed wall portions; an opening in the other of said opposed wall portions which is substantially aligned with said shaft and said first securing means; and a second securing means for securing the other end of said shaft to said other opposed wall portion via said opening, said second securing means including a deformable washer disposed in said wall opening, and compressive retaining means connected to said shaft for compressing and deforming said deformable washer into contact with the wall surface surrounding said opening whereby said shaft is retained in said other wall portion.

Since this is achieved without applying a force that urges said substantially parallel opposed wall portions towards or away from one another, deformation of the wall portions due to the attachment of the shaft is avoided.

In a preferred embodiment, said second securing means further includes an annular slug member located at said other shaft end with a frusto conical peripheral surface facing away from said other shaft end, and said deformable washer has a mating frusto conical inner surface that engages said slug frusto conical surface. Said compressive retaining means comprises a bolt which passes through said annular slug and said washer, and is received in a threaded axial opening said other shaft end. Said deformable washer is formed of a low yielding metal or an elastomer.

In a further preferred embodiment, both of said opposed wall portions are part of a single piece box-frame. However, it will be noted that the invention is also applicable to disk drives having two piece clamshell housings.

Although as described below, the invention is applied to a shaft supporting a rotary actuator, a similarly attached shaft might also be used to support the disk stack assembly. In either case, the method of attachment of the components within a box-type frame does not require such close tolerancing as the prior art, whilst at the same time avoiding physical distortion of the frame structure.

### Brief Description of the Drawings

Fig. 1 is a schematic side section of a prior art disk drive wherein the disk stack and actuator are mounted on a base plate;
Fig. 2 is a schematic side section of a disk drive according to the present invention;
Fig. 3 shows further detail of the upper end of the actuator shaft in the disk drive of Fig. 2.

### Detailed Description

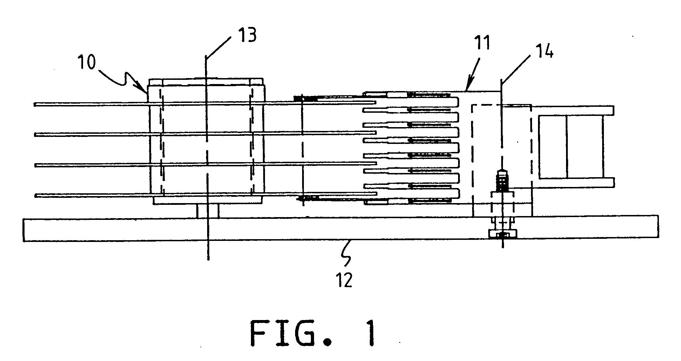

Fig. 1 illustrates a prior art disk drive assembly wherein a disk drive assembly 10 and rotary actuator 11 are supported on a base casting 12. The disk assembly 10 rotates about a centreline or axis 13 and the rotary actuator pivots about the centreline or axis 14. The proper operation of the disk drive is dependent upon the distance between and the parallelism of the centrelines 13 and 14. These can be varied by forces applied to the base or by thermal changes that induce bending of the base or non-uniform expansion. With high density storage designs, wherein track densities have been increasing from 500 tracks per inch to more than 2000 tracks per inch (along with corresponding increases in the linear bit densities), the magnitude of deformation that induces errors in the reading or writing of data becomes progressively less. This is particularly true for systems with a dedicated servo disk surface in which the positioning of a servo head on the dedicated servo surface must ensure that all of the data heads on the corresponding data disk surfaces are correctly aligned with the appropriate track centreline (or cylinder).

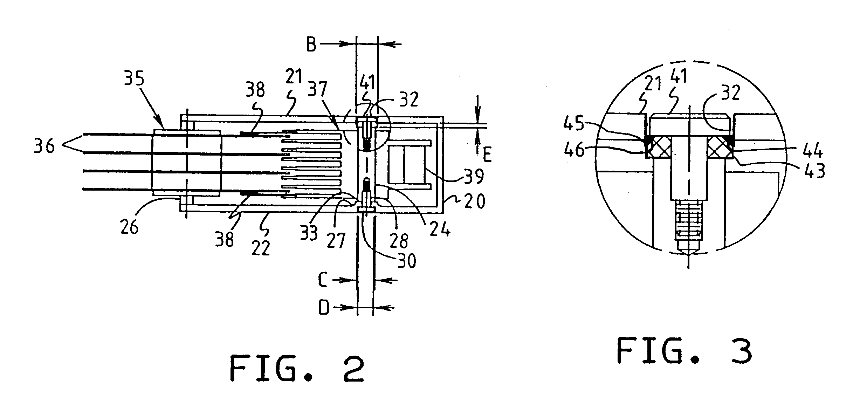

One method of reducing alignment problems between the centrelines of the disk stack and actuator in a disk drive is to use a design in which there are plate members to support each end of the disk assembly shaft and the actuator shaft. The centreline distance and parallelism can be more accurately maintained when both ends of the pair of shafts are supported and constrained. This is most effectively accomplished using a box-frame construction, as shown in Fig. 2, wherein both of the substantially parallel, shaft-supporting walls 21 and 22 are formed from a single piece box-type frame casting 20. A shaft 26 is captured at opposite ends by opposed casting walls 21 and 22 respectively and supports the spindle assembly 35 that carries and rotates the data storage disks 36. The rotary actuator 37 pivots about shaft 24 and supports head suspension assemblies 38 (two of which are shown) for movement from one concentric track to another concentric track on disks 36 when driven by a voice coil motor 39. In a design where the shafts 24 and 26 are supported at both ends, it is important to ensure that positive attachment of the shafts 24, 26 at both ends does not induce distortion forces that are similar to the distortions that the design has sought to overcome, such as the clamping of a cover or rigid attachment of subassemblies. It is required that the shafts be confined at each end, but not influence or otherwise distort the supporting wall members 21, 22 or base structure so as to cause deformation.

The box-frame design creates a further problem because the inside surfaces of the box cannot be easily machined to allow close tolerance mounting of the major components. The most accurate way to machine surfaces inside the box to mount the components is to bore a large clearance hole 32 (see Fig 2) with bore diameter B through one base casting supporting wall 21, and then make a spot faced surface 33 of the same or smaller diameter on the opposite wall 22. Wall 22 has an increased thickness boss 27 through which an opening 28 is made to receive screw 30 and an enlarged counterbore C is formed to receive the head diameter D of screw 30. The spot faced surface 33 is at the inner surface of boss 27 and aligned with the opening 32 in supporting wall 21.

The top of the actuator shaft 24 must have enough clearance E designed into it to allow assembly of the components. This clearance creates a problem since there is not only a large bored hole 32 in the top of the casting which makes mounting more difficult, but there is also a significant amount of clearance E between the top of the actuator shaft and the inside surface of the casting wall. The attachment structure and method of the present invention is designed to securely fasten the top of the actuator shaft 24 without influencing (distorting) wall 21 or the structure of cast base 20.

Once the shaft 24 is attached to the bottom wall 22 of base casting 20 using the screw 30 through the counterbored clearance hole, a slug 43 with a tapered upper peripheral surface 44 is placed on top of shaft 24. Next a washer 45, made of a low yield strength metal or an elastomer, with a mating tapered surface 46 is placed over the top of slug 43. Finally, screw 41 is threaded into the top of the shaft 24 to compress the washer 45 over the tapered surface 44 of slug 43, causing the washer to expand against the surface defining the base casting wall opening 32. This secures the top of the shaft 24 without adversely influencing the structure of the box-type base casting 20, and effectively seals the opening through which the fastener was installed.

## Claims

1. A rigid disk drive including:
two substantially parallel opposed wall portions (21, 22) between which a disk spindle assembly (10) and a rotary actuator (11) are mounted;
a non-rotatable shaft (24) for rotatably supporting at least one of said disk spindle assembly and said rotary actuator, said shaft extending perpendicularly in an axial direction from one of said opposed wall portions to the other;
a first securing means for securing one end of said shaft to one of said opposed wall portions (22);
an opening (32) in the other of said opposed wall portions (21) which is substantially aligned with said shaft and said first securing means;
and a second securing means for securing the other end of said shaft to the said other opposed wall portion (21) via said opening;
the disk drive being characterised in that:
said second securing means includes a deformable washer (45) disposed in said wall opening and compressive retaining means connected to said shaft for compressing and deforming said deformable washer into contact with the wall surface surrounding said opening whereby said shaft is retained in said other wall portion.

2. A rigid disk drive as claimed in claim 1, wherein said second securing means further includes an annular slug member (43) located at said other shaft end with a frusto conical peripheral surface (44) facing away from said other shaft end, and said deformable washer (45) has a mating frusto conical inner surface (46) that engages said slug frusto conical surface.

3. A rigid disk drive as claimed in claim 2, wherein said compressive retaining means comprises a bolt (41) which passes through said annular slug and said washer, and is received in a threaded axial opening in said other shaft.

4. A rigid disk drive as claimed in any preceding claim, wherein said deformable washer is formed of a low yielding metal or an elastomer.

5. A rigid disk drive as claimed in any preceding claim, wherein said first securing means comprises a hole through said one opposed wall portion (22), a faced surface (33) on said one opposed wall portion surrounding said hole, and a bolt (30) axially aligned with said one shaft end and received in a threaded axial opening in said one shaft end to fixedly retain said shaft against said faced surface on said one opposed wall portion.

6. A rigid disk drive as claimed in any preceding claim, wherein both of said opposed wall portions are part of a single piece box-frame.

7. A rigid disk drive as claimed in any preceding claim in which said shaft supports said rotary actuator.

## Patentansprüche

1. Ein Festplattenlaufwerk, umfassend:
zwei gegenüberliegende, im wesentlichen parallele Wandabschnitte (21, 22), zwischen die eine Plattenspindel-Baugruppe (10) und ein Rotationsaktuator (11) montiert sind;
eine nicht drehbare Welle (24) zur drehbaren Stützung der Plattenspindel-Baugruppe oder des Rotationsaktuators oder beider, wobei die Welle sich in axialer Richtung rechtwinklig von einem der gegenüberliegenden Wandabschnitte zum anderen erstreckt;
ein erstes Befestigungsmittel zur Befestigung eines Endes der Welle an einem der gegenüberliegenden Wandabschnitte (22);
eine Öffnung (32) im anderen der gegenüberliegenden Wandabschnitte (21), die im wesentlichen auf die Welle und das erste Befestigungsmittel ausgerichtet ist;
und ein zweites Befestigungsmittel zur Befestigung des anderen Endes der Welle an dem anderen gegenüberliegenden Wandabschnitt (21) durch die Öffnung,
wobei das Festplattenlaufwerk dadurch gekennzeichnet ist, daß:
das zweite Befestigungsmittel eine in der Wandöffnung befindliche verformbare Scheibe (45) und ein mit der Welle verbundenes, durch Druck wirkendes Haltemittel zum Komprimieren und Verformen der verformbaren Scheibe in Kontakt mit der die Öffnung umgebenden Wandoberfläche umfaßt, wodurch die Welle in dem anderen Wandabschnitt gehalten wird.

2. Ein Festplattenlaufwerk gemäß Anspruch 1, wobei das zweite Befestigungsmittel des weiteren ein ein an dem anderen Wellenende befindliches ringförmiges Blockglied (43) mit einer dem anderen Wellenende abgewandten kegelstumpfförmigen Außenfläche (44) umfaßt, und die verformbare Scheibe (45) über eine dazu passende kegelstumpfförmige Innenfläche (46) verfügt, die in die kegelstumpfförmige Außenfläche des Blocks eingreift.

3. Ein Festplattenlaufwerk gemäß Anspruch 2, wobei das durch Druck wirkende Haltemittel eine Schraube (41) umfaßt, die durch den ringförmigen Block und die Scheibe führt und in einer axialen Gewindeöffnung in der anderen Welle Aufnahme findet.

4. Ein Festplattenlaufwerk gemäß einem der vorangegangenen Ansprüche, wobei die verformbare Scheibe aus einem Metall mit niedriger Fließgrenze oder einem Elastomer besteht.

5. Ein Festplattenlaufwerk gemäß einem der vorangegangenen Ansprüche, wobei das erste Befestigungsmittel ein Loch durch den einen gegenüberliegenden Wandabschnitt (22), eine das Loch umgebende gesenkte Oberfläche (33) an dem gegenüberliegenden Wandabschnitt und eine Schraube (30) umfaßt, die axial auf das eine Wellenende ausgerichtet ist und in einer axialen Gewindeöffnung in dem einen Wellenende Aufnahme findet, um die Welle gegen die gesenkte Oberfläche auf dem einen gegenüberliegenden Wandabschnitt festzuhalten.

6. Ein Festplattenlaufwerk gemäß einem der vorangegangenen Ansprüche, wobei beide gegenüberliegenden Wandabschnitte Teil eines einteiligen Kastenrahmens sind.

7. Ein Festplattenlaufwerk gemäß einem der vorangegangenen Ansprüche, wobei die Welle den Rotationsaktuator unterstützt.

## Revendications

1. Unité d'entraînement de disques rigide, comprenant:
deux portions de paroi opposées sensiblement parallèles (21, 22) entre lesquelles sont montés un ensemble de disques sur pivot, (10) et un positionneur de rotation (11);
un arbre fixe (24) pour supporter de façon articulée au moins un desdits ensemble de disques et positionneur de rotation, ledit arbre se prolongeant perpendiculairement dans une direction axiale depuis une desdites portions de paroi opposées jusqu'à l'autre;
un premier moyen de fixation pour fixer une extrémité dudit arbre sur une desdites portions de paroi opposées (22);
une ouverture (32) faite dans l'autre desdites portions de paroi opposées (21) qui est sensiblement alignée avec ledit arbre et ledit premier moyen de fixation;
un deuxième moyen de fixation pour fixer l'autre extrémité dudit arbre sur ladite autre portion de paroi opposée (21) par ladite ouverture;
l'unité d'entraînement de disques étant caractérisée en ce que:
ledit deuxième moyen de fixation comprend une rondelle déformable (45) disposée dans ladite ouverture de la paroi et un moyen de retenue de compression connecté audit arbre pour comprimer et déformer ladite rondelle déformable pour qu'elle vienne en contact avec la surface de la paroi entourant ladite ouverture, permettant alors audit arbre d'être retenu dans ladite autre portion de paroi.

2. Unité d'entraînement de disques rigide selon la revendication 1, dans laquelle ledit deuxième moyen de fixation comprend en outre un membre de garniture annulaire (43) placé à ladite autre extrémité de l'arbre et ayant une surface périphérique conique tronquée (44) écartée, en lui faisant face, de ladite autre extrémité de l'arbre, et ladite rondelle déformable (45) a une surface interne conique tronquée d'accouplement, 46) qui vient s'engager avec ladite surface conique tronquée de la garniture.

3. Unité d'entraînement de disques rigide selon la revendication 2, dans laquelle ledit moyen de retenue de compression comprend un boulon (41) qui passe dans ladite garniture annulaire et ladite rondelle et qui est reçu dans une ouverture filetée axialement dans ladite autre extrémité de l'arbre.

4. Unité d'entraînement de disques rigide selon l'une quelconque des revendications précédentes, dans laquelle ladite rondelle déformable est faite dans un métal peu élastique ou un élastomère.

5. Unité d'entraînement de disques rigides selon l'une quelconque des revendications précédentes, dans laquelle ledit premier moyen de fixation comprend un trou fait dans ladite une portion de paroi opposée (22), une surface lamée (33) sur ladite une portion de paroi opposée entourant ledit trou, et un boulon (30) aligné axialement avec ladite une extrémité de l'arbre pour retenir de façon fixe ledit arbre contre ladite surface lamée sur ladite une portion de paroi opposée.

6. Unité d'entraînement de disques rigide selon l'une quelconque des revendications précédentes, dans laquelle lesdites portions de paroi opposées font toutes deux partie d'un bâti en une seule pièce en forme de boîtier.

7. Unité d'entraînement de disques rigide selon l'une quelconque des revendications précédentes, dans laquelle ledit positionneur de rotation est monté sur ledit arbre.
